# EUROPÄISCHE PATENTANMELDUNG

(11) **EP 1 329 258 A2**
(43) Veröffentlichungstag der Anmeldung: **23.07.2003**
(21) Anmeldenummer: 03000704.1
(22) Anmeldetag: 13.01.2003
(51) Int. Cl.: B01J 19/00, B81B 1/00

(54) **Mikroreaktor für Reaktionen mit flüchtigem oder gasförmigem Produkt**

(30) Priorität: 18.01.2002 DE 10202017
(71) Anmelder: CPC Systems GmbH Cellular Process Chemistry Systems GmbH, 55131 Mainz (DE)
(72) Erfinder: Golbig, Klaus Dr., D-55296 Harxheim (DE)
(74) Vertreter: Kompter, Hans-Michael, Dr.

(57) **Zusammenfassung**

Die Erfindung betrifft einen Mikroreaktor zur Durchführung chemischer Reaktionen, dadurch gekennzeichnet, dass eine flüssige Phase in mindestens einem im wesentlichen ununterbrochenen Kapillarfaden entlang der Oberfläche mindestens einer Platte oder Schicht fliesst und die in der flüssige Phase enthaltenen gasförmigen und/oder flüchtigen Bestandteile kontinuierlich aus der flüssigen Phase austreten.

## Beschreibung

Die Erfindung bezieht sich auf einen Mikroreaktor zur Durchführung chemischer Reaktionen, dadurch gekennzeichnet, dass eine flüssige Phase in mindestens einem im wesentlichen ununterbrochenen Kapillarfaden entlang der Oberfläche mindestens einer Platte oder Schicht fliesst und die in der flüssige Phase enthaltenen gasförmigen und/oder flüchtigen Bestandteile kontinuierlich aus der flüssigen Phase austreten.

Bei chemischen Reaktionen, bei denen Edukte und Produkte in einem Gleichgewicht vorliegen, kann durch kontinuierliches Entfernen zumindest eines der Produkte dieses Gleichgewicht so verschoben werden, das ein vollständiger Umsatz der Edukte zu den Produkten resultiert. Bei Reaktionen, in denen mindestens gasförmiges oder flüchtiges Produkt entsteht, ist die Verschiebung des Gleichgewichtes in die gewünschte Richtung einfach durch Entfernung des gasförmigen oder flüchtigen Reaktionsproduktes aus der flüssigen Phase möglich:

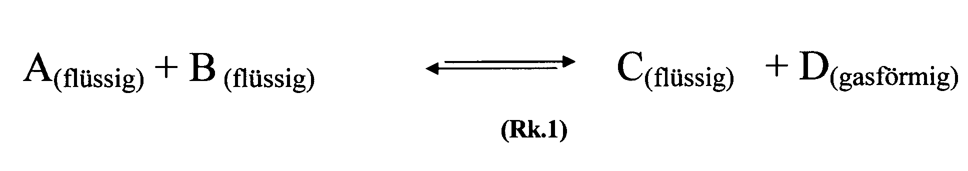

Bei konventionellen Batch-Methoden nimmt die Viskosität der Reaktionslösung mit abnehmenden Anteil an flüchtigen Bestandteilen in der Regel stark zu. Das Entfernen von Resten dieser Bestandteile und damit das Erreichen eines hohen Umsatzes der Reaktion wird dadurch immer schwieriger. Deshalb muss entweder auf einen vollständigen Umsatz verzichtet werden oder bei höheren Temperaturen gearbeitet werden, um den Umsatz zu erhöhen. Bei höheren Temperaturen kann es wiederum vermehrt zum Ablauf alternativer Reaktionspfade und somit zu der Entstehung von unerwünschten Nebenprodukten kommen.

Alternativ zum Batch-Kessel werden oft sogenannte Riesel- oder Fallfilmverdampfer zur Entfernung von unerwünschten Bestandteilen aus der Reaktionslösung eingesetzt. Bei gebräuchlichen Rieselfilmverdampferanlagen handelt es sich um senkrecht stehende Rohrbündelapparate, die in der Regel mit kondensierendem Dampf im Mantelraum beheizt werden. Das flüssige Reaktionsgemisch wird auf die Rohre aufgegeben und fließt an der Innenseite als Flüssigkeitsfilm unter dem Einfluss der Schwerkraft herab. Durch Wärmezufuhr wird das Reaktionsgemisch in den Rohren erhitzt und teilweise verdampft. Um Ungleichmäßigkeiten in der Filmdicke auszugleichen, kommt oft eine sogenannte Umlaufschaltung zum Einsatz - beispielsweise damit der Film nicht zu dünn wird und an einer Stelle aufreißt. Werden chemische Reaktion durchgeführt, bei dem ein Gas erzeugt wird, muss dieses Gas aus den dicken Filmen zusätzlich ausgetrieben werden. Dieses kann zu einer unerwünschten Blasenbildung im Rieselfilm in den Rohren führen. Diese Rieselfilme haben also den Nachteil einer ungleichmäßigen Dicke und Form. Die dadurch bedingte undefinierte Verweilzeit der Reaktionslösung im Fallrohr führt zu ungleichmäßigen Umsätzen (durch Über- bzw. Unterreaktion), d.h. Verbleib von Edukten im Reaktionsgemisch sowie zu vermehrter Nebenproduktbildung.

Die Aufgabe der vorliegenden Erfindung besteht somit in der Bereitstellung eines kontinuierlich arbeitenden Mikroreaktors, in dem chemische Reaktionen und physikalische Prozesse durchgeführt werden und entstehende flüchtige und/oder gasförmige Bestandteile und Reaktionsprodukte aus einer flüssigen Phase (Lösung, Suspension, Dispersion, Emulsion oder Mischung) unter besser kontrollierbaren Bedingungen kontinuierlich entfernt werden können.

Der erfindungsgemäße Mikroreaktor soll
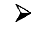 eine exakte Temperaturführung der Reaktionsprozesse ermöglichen und durch ein geringes inneres Volumen das Gefahrenpotential von stark exothermen oder explosiblen Reaktionen reduzieren,
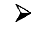 Die Selektivität der Umsetzung durch bessere Kontrolle von Reaktionsparametern wie Filmdicke, Druck, Temperatur und Reaktionszeit erhöhen,
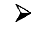 in einer chemischen Reaktion den vollständigen Umsatz der Reaktanten zu den Produkten ermöglichen,
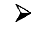 preiswert herstellbar sein, um gegebenenfalls als Einwegsystem verwendet werden zu können.

Die unterschiedlichen Elemente des Mikroreaktors sollen
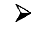 je nach Bedarf kombiniert werden können,
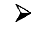 lösbar oder unlösbar miteinander verbunden werden können,
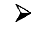 So kombiniert werden können, dass ein Reaktorblock mit beliebig vielen identischen Modulen entsteht, der die umgesetzte Stoffmenge frei skalierbar macht.

Die gestellte Aufgabe wird aufgrund der Merkmale des Anspruchs 1 gelöst und durch die weiteren Merkmale der Unteransprüche ausgestaltet und weiterentwickelt. Somit ist Gegenstand der Erfindung ein Mikroreaktor zur Durchführung chemischer Reaktionen, dadurch gekennzeichnet, dass eine flüssige Phase in mindestens einem im wesentlichen ununterbrochenen Kapillarfaden entlang der Oberfläche mindestens einer Platte oder Schicht fliesst und die in der flüssige Phase enthaltenen gasförmigen und flüchtigen Bestandteile kontinuierlich aus der flüssigen Phase austreten.

### Beschreibung der Erfindung

Der Begriff "flüssige Phase" umfasst sowohl Reaktionsmischungen in flüssiger, suspendierter, emulgierter oder dispergierter Form, als auch solche, die in einem Gemisch mit einem fluiden Verdünnungsmittel eingesetzt werden. Der Begriff "Reaktionsmischung" umfasst Reinstoffe oder Gemische, welche die verschiedenen Substanzen enthalten.

Der Begriff "flüchtige Bestandteile" umfasst alle in der Reaktionsmischung enthaltenen Substanzen, die durch Veränderung der Prozessparameter wie beispielsweise Temperatur oder Druck und/oder mittels eines Trägergases aus der Reaktionsmischung entfernt werden können. Insbesondere umfasst der Begriff "flüchtige Bestandteile" Substanzen, die bei Raumtemperatur und Normaldruck flüssig, aber bei Temperaturen zwischen T= 30°C und T= 300°C und/oder Drücken zwischen p=1,5bar und p= 10⁻²bar, insbesondere bei Temperaturen zwischen T= 40°C und T= 200°C und/oder Drücken zwischen p= 2bar und p=10⁻¹ bar gasförmig sind.

Der Begriff "Trägergas" bezeichnet Gase, welche sowohl zum Spülen des Funktionsraumes als auch zum Transport anderer flüchtiger Substanzen eingesetzt werden können.

Ein "Kapillarfaden" bildet sich aus, wenn eine fließende flüssige Phase durch Grabenstrukturen geführt wird, welche sich dadurch auszeichnen, das die Struktur keinen geschlossenen Kanal bildet, sondern eine offene Fläche zu einer weiteren Phase, bevorzugt einer gasförmigen Phase, aufweist.
Die Formgebung des erfindungsgemäßen Mikroreaktors ist an sich unkritisch. Die einzelnen Platten oder Schichten können in jeder geeigneten geometrischen Form vorliegen. Vorzugsweise sind sie quadratisch oder rechteckig.

Wesentlich für den erfindungsgemäßen Mikroreaktor sind die Dimensionen der mikrostrukturierten Bereiche, in denen die fluide Reaktionsmischung durch den Funktionsraum geführt wird.

Die Dimensionen der Strukturen auf der Oberfläche der Fluidführungsplatte (1) müssen so gewählt werden, dass ein möglichst hoher Durchsatz gewährleistet ist. Andererseits müssen die Strukturen klein genug sein, um die immanenten Vorteile der Mikroreaktionstechnik, nämlich
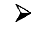 hervorragende Kontrolle und Steuerung von Temperatur und Druck,
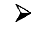 Passive Strömungsführung durch Wirkung von Kapillarkräften,
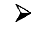 laminare Strömung,
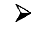 schneller diffusiver Stoffaustausch
auszunutzen. Daher sind die Strukturen in einer Dimension kleiner als 1000µm, vorzugsweise kleiner als 300µm, insbesondere kleiner als 100µm.

Weiterhin kann die Konstruktion, insbesondere die Länge und Anordnung der Fluidführungsplatte (1) an die jeweiligen Reaktionsbedingungen, wie Reaktionsgeschwindigkeit, Viskosität der fluiden Reaktionsmischung usw. angepasst werden.

Bei der chemischen Prozessführung müssen diverse Parameter beachtet werden. Deshalb ist der Einbau von Sensoren in den Mikroreaktor vorgesehen, insbesondere zur Erfassung der Temperatur, des Drucks und gegebenenfalls der Strömungsgeschwindigkeiten des Volumenstroms. Die Sensoren sind mit Regelkreisen verbunden, um gegebenenfalls den Betrieb zu regeln.

Die Erfindung wird anhand von Zeichnungen beschrieben. Dabei zeigen:
Fig. 1 eine Fluidführungsplatte (1) in schematischer Darstellung, sowie eine Ausschnittsvergrößerung derselben.
Fig. 2 einen erfindungsgemäßen Mikroreaktor bestehend aus fünf strukturierten Platten mit Zu- und Ableitungen für die fluide Reaktionsmischung sowie für Trägergas und ein Temperiermedium.
Fig. 3 einen Querschnitt durch eine Anordnung von drei parallel geschalteten, erfindungsgemäßen Mikroreaktoren.
Fig. 4 den Aufbau einer Fluidführungsplatte (1) aus zwei Elementen, einem rostförmigen Element (41) und einem unstrukturierten Element (42) in schematischer Darstellung.
Fig. 5 die schematische Fluidführung der Reaktanten und Produkte einer Gleichgewichtsreaktion (Rk. 1) und des Trägergases (G) durch den Funktionsraum.
Fig. 6 die schematische Fluidführung (in Pfeilrichtung) der Reaktanten (A+B) und der Produkte (C+D) einer Gleichgewichtsreaktion (Rk. 1) durch den Funktionsraum (51) mit einer fluiden Phase (52) und einer gasförmigen Phase (53) sowie die Führung der Wärmeträgermedien (54, 55) in einem erfindungsgemäßen Mikroreaktor, wenn der Funktionsraum (51) evakuiert wird.

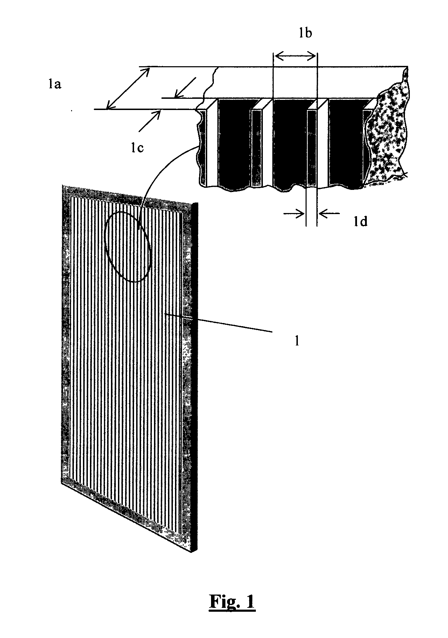

Zentrales Bauteil des erfindungsgemäßen Mikroreaktors ist eine Fluidführungsplatte (1, Fig.1). Die Platte hält die reagierende Flüssigkeit in speziellen Grabenstrukturen unter Ausnutzung von Kapillarkräften an ihrer Oberfläche. Sie hat eine Stärke (la) von 120µm bis 4000µm, vorzugsweise von 200µm bis 2000µm. Sie enthält offene Kapillarrillen, in welchen Flüssigkeitsfäden erzeugt werden. Diese Kapillarrillen haben eine Breite (1b) von 20µm bis 2000µm, vorzugsweise 50µm bis 1500µm, insbesondere 100µm bis 300µm und eine Tiefe (1c) von 20µm bis 500µm, vorzugsweise von 50µm bis 300µm, insbesondere 60µm bis 150µm. Die Stege (1d) zwischen zwei benachbarten Kapillarrillen haben eine Breite von 5µm bis 250µm, vorzugsweise von 20µm bis 150µm, insbesondere 30µm bis 100µm.
Ein weiterer Gegenstand der Erfindung ist ein Prozess zur Herstellung einer strukturierten Fluidführungsplatte (1) für einen erfindungsgemäßen Mikroreaktor. Die Strukturierung kann durch Ätzen, Galvano- bzw. Elektroformung, Photolithographie, Stereolithographie, Laserund Wasserstrahlschneiden und -bohren, Stanzen ,Prägen, Fräsen, Hobeln, Mikrofunkenerosion, Tiefziehen, Bohren, Spritzguss und Sintern sowie mit Kombinationen derselben wie z.B. ein LIGA-Verfahren erfolgen.

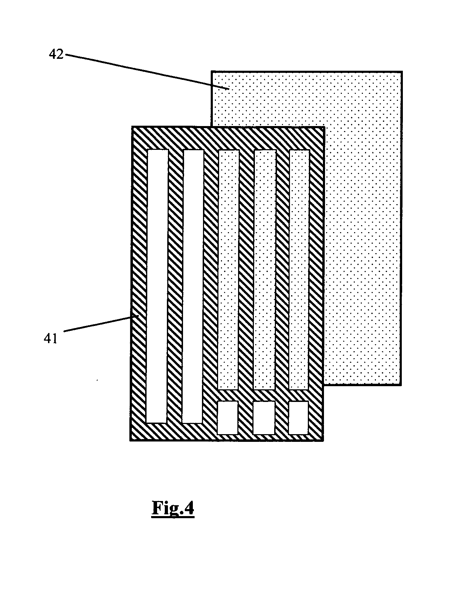

In einem weiteren, erfindungsgemäßen Prozess bringt man eine rostförmige Platte (41) auf eine zweite, unstrukturierte Platte (42) auf (Fig.4), und beschichtet den Verbund gegebenenfalls mit einem katalytisch wirksamen Material.

Weiterhin Gegenstand der Erfindung ist somit eine Fluidführungsplatte (1) mit einer Wandstärke von 120µm bis 4000µm, vorzugsweise 200µm bis 2000µm für einen erfindungsgemäßen Mikroreaktor, im wesentlichen bestehend aus zwei planparallelen, aufeinander befestigten Elementen, wobei
(a) das erste Element (41) eine Wandstärke von 20µm bis 500µm, vorzugsweise von 50µm bis 300µm, insbesondere 100µm bis 200µm, und eine rostförmige Struktur mit mehreren parallel angeordneten Stegen, die sich zwischen zwei orthogonal dazu angeordneten Stegen mit gleicher Wandstärke erstrecken, aufweist, wobei die Durchbrechungen zwischen den parallel angeordneten Stegen eine Breite von 20µm bis 2000µm, vorzugsweise 100µm bis 250µm, insbesondere 150µm bis 200µm und die parallel angeordneten Stege eine Breite von 5µm bis 250µm, vorzugsweise von 50µm bis 150µm, insbesondere 30µm bis 100µm aufweisen,
(b) das zweite Element (42) eine unstrukturierte, ebene Platte von gleicher Länge und Breite wie das erste Element (41) ist und eine Stärke von 20µm bis 3980µm aufweist.

Die Fluidführungsplatte (1) weist in der Regel eine Länge von 2cm bis 50cm, vorzugsweise 4cm bis 40cm, insbesondere 5cm bis 25cm und eine Breite von 5cm bis 25cm, vorzugsweise 6cm bis 20cm, insbesondere 7cm bis 15cm auf.

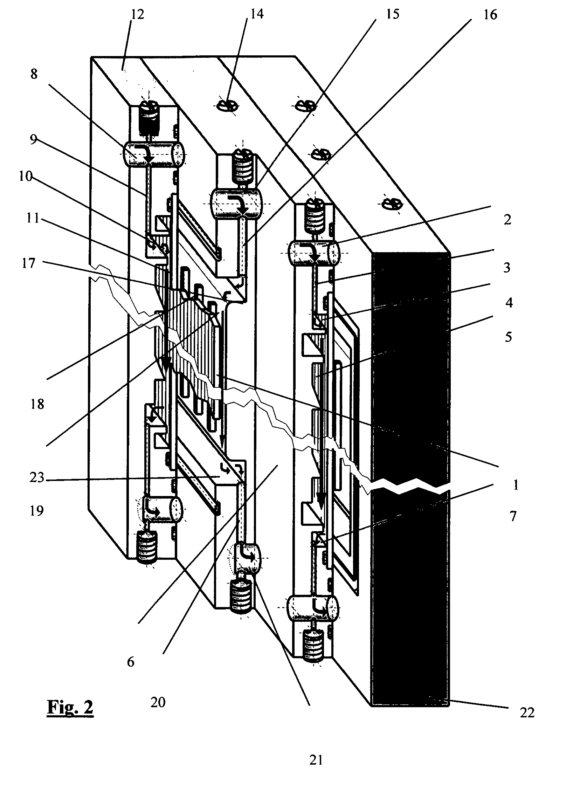

Im in Fig. 2 dargestellten Ausführungsbeispiel sei angenommen, dass der erfindungsgemäße Mikroreaktor aus fünf strukturierten Platten, einer Bodenplatte (22), einer Zwischenplatte (6), und einer Deckelplatte (12) sowie zwei Fluidführungsplatten (1) besteht. Die beiden Fluidführungsplatten (1) sind jeweils zwischen zwei dieser Platten angebracht. Sie können auf ihrer Rückseite durch Flachdichtungen, Bonden oder Kleben, bevorzugt durch O-Ringe, gedichtet werden. Die Zuführungsleitungen (2), (8) und (15) werden ebenfalls durch Flachdichtungen, Bonden oder Kleben, bevorzugt durch O-Ringe, gedichtet.

Nicht dargestellt sind Führungsstifte und Schrauben, welche die Platten dichtend zusammenpressen.

Die Fluidführungsplatte (1) liegt auf einer Zwischenplatte (6) bzw. der Bodenplatte (22) auf, durch welche die fluide Reaktionsmischung dem Reaktor über die Zuleitung zugeführt wird. Diese ist an eine Bohrung (3) angeschlossen, die in den Verteilungskanal (4) mündet, welcher eine Strömungsgleichverteilung zwischen den Grabenstrukturen auf der mikrostrukturierten Fluidführungsplatte gewährleistet. Zwischen dem Verteilungskanal (4) bzw. dem Flüssigkeitssammelkanal (7) und dem Funktionsraum (5) ist eine Strömungsengstelle vorgesehen. Solch eine Strömungsengstelle kann z. B. dadurch erreicht werden, dass die mikrostrukturierte Fluidführungsplatte (1) gegen die Zwischenplatte (6) gepresst wird und die hierbei entstehenden Mikroöffnungen den Fluss der fluiden Reaktionsmischung drosseln. Nachdem die Flüssigkeit diese Strömungsengstelle passiert hat, gelangt sie in den Funktionsraum, wo sie auf die gewünschte Reaktionstemperatur gebracht wird und gleichzeitig sie in Kontakt mit dem Trägergasstrom kommt. Dieser Kontakt besteht so lange, wie die fluide Reaktionsmischung in den Mikrokapillarrillen des Fluidführungsplatte (1) hinabläuft.

Das Trägergas strömt in analoger Weise über die Gasführungsleitung (8) und die abzweigende Bohrung (9) in den Gasverteilungskanal (10). Diese Bohrungen sind an der Gehäuseaußenwand mittels Schrauben (14) verschlossen bzw. abgedichtet. Der Strömungsweg des Gases ist mit Strömungsengstelle (11) versehen, die von der Fluidführungsplatte (1) und einer Zwischenplatte (6) und/oder der Deckelplatte (12) gebildet werden. Falls ohne Trägergas, also destillativ unter Anlegung eines Unterdruckes gearbeitet wird, wird die Gasführungsleitung (8) verschlossen.

Um die Schleppwirkung des Trägergases zu verbessern, wird die Reaktionskammer (5) vorzugsweise mit Rampen (13) ausgerüstet, welche insbesondere versetzt zueinander angeordnet sind. Wird unter Überdruck gearbeitet, verhindern die Stege (18) ein Durchbiegen der Fluidführungsplatte. Wird hingegen bei Unterdruck (im Vakuum) gearbeitet, so wird eine Durchbiegung des Reaktionsbleches 1 in den Funktionsraum hinein verhindert, indem diese mit den das Wärmeträgermedium führenden Stegen verbunden , über zusätzliche Stützen im Funktionsraum (nicht abgebildet) oder speziell ausgeführte Rampen (13, nicht abgebildet) abgestützt werden. So kann die Vorrichtung mit Drücken von 300bar bis 10⁻³bar, vorzugsweise 10 bis 10⁻² bar, ganz besonders bevorzugt zwischen 1bar und 10⁻¹ bar betrieben werden.

Die Aufgabe und Verteilung der Flüssigkeit sowie des Trägergases erfolgt über horizontale Verteilerkanäle und kann von der gleichen Seite im Gleich- oder im Gegenstrom erfolgen. Die flüssigen sowie gasförmigen Bestandteile des Reaktionsgemisches können über horizontale Abführungen gemeinsam oder voneinander getrennt abgeführt werden.

Durch kombiniertes Heizen und Evakuieren können flüchtige Bestandteile der Reaktionsmischung (auch Lösemittel) durch Verdampfung aus der flüssigen Phase entfernt werden. Dabei wird unter speziell angepassten Reaktionsbedingungen der Gasphasendruck so erniedrigt, dass diese Verbindung in den gasförmigen Zustand übergeht und mit dem Trägergas abgeführt werden können.

Über Sensoren kann eine Kontrolle der Reaktionsbedingungen (Temperatur, Druck, Konzentration, pH-Werte, Flussraten, Fadendicke) erfolgen.

Von der Hauptzuführungsleitung (2) fließt die fluide Reaktionsmischung durch Abzweige (3) den einzelnen Reaktoreinheiten zu. Eine gleichmäßige Verteilung der Strömung über die ganze Breite der Fluidführungsplatte (1) kann auf mehrere Arten erreicht werden:
a) Wie in Fig. 2 dargestellt, mittels eines Verteilungskanals mit einer Strömungsengstelle stromabwärts. Diese Strömungsengstelle kann gebildet werden von:
   i. einem schmalen Spalt zwischen der mikrostrukturierten Fluidführungsplatte (1) und einem Gegenstück mit einer flachen Stirnfläche, die gegen den mikrostrukturierte Bereich (1) gedrückt wird, wobei kleine Öffnungen mit einem definierten Druckverlust entstehen
   ii. einem schmalen Spalt zwischen einem ebenen Bereich der Fluidführungsplatte (1) und einem Gegenstück mit einer mikrostrukturierten Stirnfläche, die ebenfalls gegen die Fluidführungsplatte (1) gedrückt wird, um kleine Öffnungen mit einem definierten Druckverlust zu formen
   iii. einem porösen Strömungswiderstand, der zwischen dem Verteilungskanal (4) und der Reaktionskammer (5) angeordnet ist
b) Mittels eines Strömungsgleichverteilungsnetzwerkes anstatt des Verteilungskanals, vorzugsweise als Bifurkationsnetzwerk ausgeführt
c) durch einen Satz von Düsen, die den flüssigen Reaktanten gegen die Fluidführungsplatte (1) sprühen und so die Flüssigkeit gleichmäßig verteilen

Am unteren Ende des Kapillarfadens wird vorzugsweise eine weitere Druckverlustbarriere angebracht, um auch für die Flüssigkeitsabfuhr eine gleichmäßige Strömung über die Breite sicherzustellen. Diese verhindert, dass der Funktionsraum (5) geflutet wird und stellt eine gleichmäßige Verweilzeitverteilung der Flüssigkeit im erfindungsgemäßen Mikroreaktor sicher. Die Druckverlustbarrieren erfüllen noch eine weitere Funktion. Sie stellen gleichzeitig sicher, dass der Kontakt zwischen Flüssigkeit und Gas sich nur auf den temperierten Bereich erstreckt.

Das Trägergas tritt in die Reaktoreinheit über die Bohrung (9) ein, die von der Reaktionsgaszuführung (8) abzweigt. Von dort strömt das Gas in den Gasverteilungskanal (10), der zusammen mit der Strömungsengstelle (11) für eine Gleichverteilung über die Breite der Fluidführungsplatte (1) sorgt. Die Strömungsengstelle (11) bewirkt einen höheren Druckverlust als der Gasverteilungskanal (10), so dass das Gas überall mit demselben Betrag pro Längeneinheit abfließt. Alternativ können zur Erzeugung einer gasseitigen Strömungsgleichverteilung auch folgende Möglichkeiten realisiert werden:
a. schmale Strömungsengstellen zwischen dem Gasverteilungskanal (10) und dem Funktionsraum (5)
b. ein poröses bzw. gasdurchlässiges Material anstatt diskreter Öffnungen
c. ein Bifurkationsnetzwerk anstatt der Kombination von Gasverteilungskanal und Strömungswiderstand zum Funktionsraum hin

Vorzugsweise wird ein weiterer Gleichverteilungssammler am unterem Austritt aus dem Funktionsraum (5) angebracht, um ein gleichverteiltes, homogenes Strömungsfeld im unteren Teil des Funktionsraumes (5) zu gewährleisten.

Um die Wirkung des Trägergases zu intensivieren, sind spezielle Rampen (13) auf der Fluidführungsplatte (1) gegenüberliegenden Seite des Funktionsraumes(5) angebracht. Sie bewirken, dass die wandnahe Strömungsgrenzschicht von der Wand weg in Richtung Mikrokapillarblech gelenkt wird. Um diesen Effekt noch zu verstärken, sind sie in der Regel versetzt zueinander angeordnet.

Flüssigkeitsseitig beeinflussen die Kapillarfadendicke und die Mikrostrukturierung der Fluidführungsplatte (1) den Austritt der flüchtigen Komponenten der Reaktionsmischung in die Gasphase wesentlich. Die mittlere Kapillarfadendicke stellt sich entsprechend der Flüssigkeitsbelastung und den Flüssigkeitseigenschaften (wie Dichte, Viskosität etc.) ein. Je höher der gewählte Durchsatz, desto größer die Fadendicke und damit auch der Weg, den die flüchtigen Bestandteile der Reaktionsmischung in der Flüssigkeit im Mittel diffusiv zurücklegen müssen.

Die Fluidführungsplatte (1) kann auf ihrer Rückseite gekühlt bzw. beheizt werden, wobei ein flüssiges oder gasförmiges Wärmeträgermedium in Kanälen von 0,5mm bis 2mm Weite strömt. Die Versorgung mit dem Wärmeträger geschieht über eine Zuführungsleitung (15) und Bohrungen (16), die zu den einzelnen Reaktionsplatten (1) abzweigen. Die Abfuhr des Wärmeträgermediums geschieht über den Wärmeträgersammelkanal (19), Bohrungen (20) und die Auslassleitung (21). Das Zusammenspiel von Wärmeträgerverteilungskanal (17) mit den Wärmeübertragungskanälen (23) bewirkt eine gute Strömungsgleichverteilung des Wärmeträgermediums, insbesondere wenn die Zuführungsleitung (15) und die Auslassleitung (21) diagonal in der Zwischenplatte (6) angeordnet sind, was aus Gründen der Übersichtlichkeit in Fig. 2 nicht so dargestellt ist.

Eine Temperierung der Reaktionsschicht ist von der Rückseite her durch flüssige oder gasförmige Medien in einem Temperaturbereich von -80°C bis +400°C, vorzugsweise in einem Temperaturbereich von -40°C bis +300°C, ganz besonders bevorzugt in einem Temperaturbereich von -20°C bis +200°C möglich. Alternativ zur Temperierung der Fluidführungsplatte mit fluiden Temperiermedien kann auch ein Festkörper, z.B. eine elektrisch beheizte Platte oder ein Peltierelement, als Temperierelement verwendet werden.

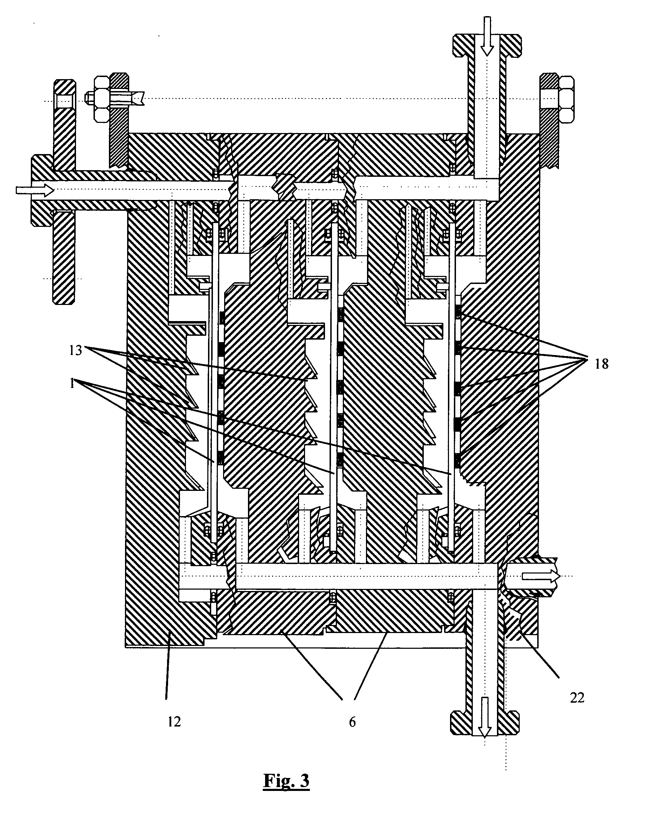

Durch interne Parallelisierung, d.h. die Hinterschaltung von mehreren Einzelreaktoren in einem Reaktionsblock, kann die umgesetzte Menge bis in den technisch relevanten Bereich gesteigert werden. Bereits durch Kombination von einer Bodenplatte (22) mit einer Fluidführungsplatte (1) und einer Deckelplatte (12) entsteht ein Reaktor. Durch Hinzufügen einer Zwischenplatte (6) und einer weiteren Fluidführungsplatte (1) entsteht ein zusätzliches Reaktormodul. In Fig. 3 ist die Parallelisierung, von drei Mikrokapillarreaktoren gezeigt. Die Reaktionsmischung wird jeweils über eine Zuleitung zugeführt und gleichmäßig auf die einzelnen Reaktionseinheiten verteilt. Auch die Abfuhr der gesammelten flüssigen bzw. gasförmigen Phasen läuft über eine gemeinsame Leitung. Dadurch entsteht ein modulares Reaktionssystem mit einer frei skalierbaren Anzahl von Zwischenplatten (6) und Fluidführungsplatten (1).

Die einzelnen Platten oder Schichten können durch Schraubverbindungen oder Klammerpressen zusammengehalten werden, wenn es um eine lösbare Verbindung geht. Man kann auch Schweißen, Bonden, Kleben, Löten oder Nieten anwenden, wenn ein solches Reaktionssystem nach dem Zusammenbau nicht mehr verändert werden soll.

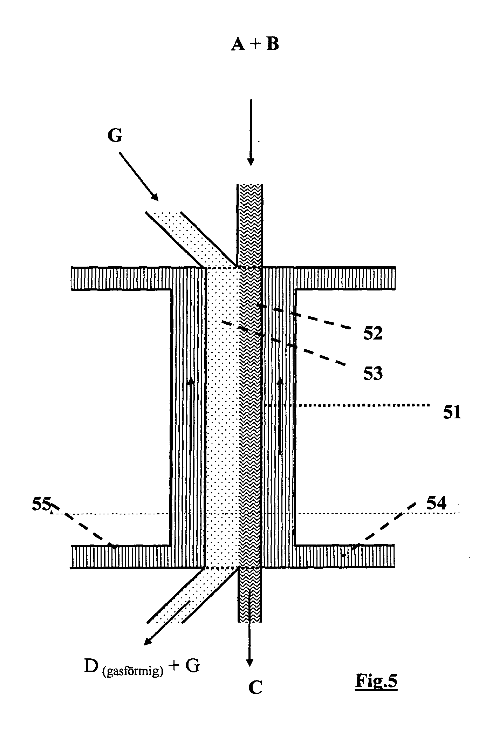

Die Fluidführung der Reaktanten A+B (in Pfeilrichtung), der Produkte C+D einer Gleichgewichtsreaktion (Rk. 1) und des Trägergases G durch den Funktionsraum (51) mit einer fluiden Phase (52) und einer gasförmigen Phase (53) sowie die Führung der Wärmeträgermedien (54, 55) in einem erfindungsgemäßen Mikroreaktor, wenn der Funktionsraum (51) von Trägergas G durchströmt wird, ist in Fig. 5 schematisch dargestellt. Das Trägergas G kann dabei wahlweise im Gleichstrom oder im Gegenstrom zur Reaktionsmischung geführt werden. Ebenso können die Wärmeträgermedien (54, 55), unabhängig voneinander, im Gleichstrom oder im Gegenstrom zur Reaktionsmischung geführt werden.

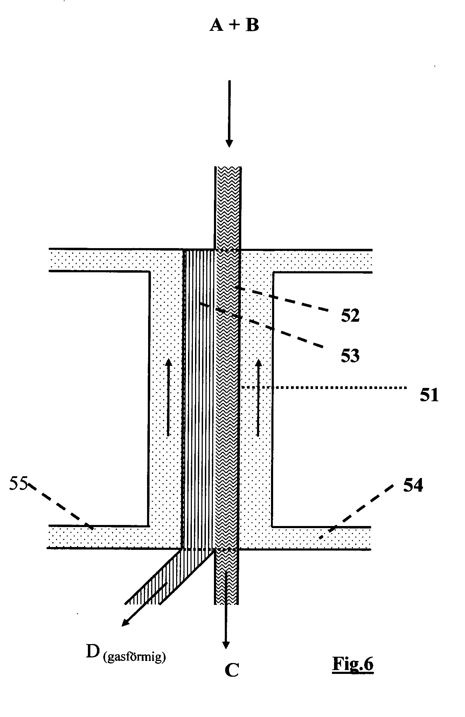

Die Fluidführung der Reaktanten A+B (in Pfeilrichtung) und der Produkte C+D einer Gleichgewichtsreaktion (Rk. 1) durch den Funktionsraum (51) mit einer fluiden Phase (52) und einer gasförmigen Phase (53) sowie die Führung der Wärmeträgermedien (54, 55) in einem erfindungsgemäßen Mikroreaktor, wenn der Funktionsraum (51) evakuiert wird, ist in Fig. 6 schematisch dargestellt. Auch hier können die Wärmeträgermedien (54, 55), unabhängig voneinander, im Gleichstrom oder im Gegenstrom zur Reaktionsmischung geführt werden.

Ein weiterer Gegenstand der Erfindung ist ein Prozess zur Herstellung eines erfindungsgemäßen Mikroreaktors, welcher folgende Schritte umfasst:
(a) Herstellen von Platten oder Schichten, deren Oberflächen mikro- und/oder feinwerktechnisch so bearbeitet werden, dass sie in Kombination mit einer weiteren Platte oder Schicht Reaktions- und/oder Funktionsräume ausbilden
(b) Herstellung einer oder mehrerer Fluidführungsplatten (1)
(c) Stapeln der einzelnen Platten oder Schichten in geeigneter Reihenfolge und Orientierung und
(d) dichtendes Anpressen oder festes oder wieder lösbares Verbinden der einzelnen Platten oder Schichten

Die Strukturierung bei den Schritten (a) und/oder (b) kann durch Ätzen, Laser- und Wasserstrahlschneiden und -bohren, Stanzen, Prägen, Fräsen, Hobeln, Mikrofunkenerosion, Tiefziehen, Bohren, Spritzguss und Sintern und mit Kombinationen derselben wie ein LIGA-Verfahren erfolgen.

Da die Fertigung von Mikrostrukturen ist in der Regel ein teurer und aufwendiger Prozess ist, erfolgt die Fertigung der Fluidführungsplatten (1) bei Schritt (b) vorzugsweise aus zwei Elementen. Auf einer ersten Platte (41) werden statt Verteifungen Durchbrüche erzeugt, so dass ein Rost entsteht. Dieser wird auf eine zweite, nicht strukturierte Platte (42) aufgebracht und unlösbar verbunden ("gebondet"). Die beiden Elemente können aus dem selben oder aus unterschiedlichen Materialien gefertigt sein. Bevorzugte Methoden für das Bonden sind Schweißen, insbesondere Diffusionsschweißen sowie Löten, insbesondere Vakuumlöten.

Die Werkstoffe, aus denen die Platten bestehen, richten sich in erster Linie nach den zu verarbeitenden Stoffen und chemischen Prozessen. Allgemein kommen die für die Chemie tauglichen Werkstoffe Metall, Glas, Keramik, Kunststoff und Halbleiterbaustoffe sowie Kombinationen dieser Werkstoffe in Betracht. Vorzugsweise werden folgende Materialien verwendet: Edelstahl, Keramik, katalytisch aktive Materialien, Kunststoffe, Graphit oder Tantal. Kombinationen verschiedener Materialien sind möglich. Ganz besonders bevorzugt ist Edelstahl.

In einer weiteren bevorzugten Ausführungsform des erfindungsgemäßen Mikroreaktors bilden katalytisch aktive Metalle das Material der Fluidführungsplatte (1) oder werden auf dieses aufgebracht, z.B. durch Aufdampfen oder Beschichten. Für katalysierte Reaktionen ist der enge Kontakt zwischen Reaktionsmischung und Katalysator (=Metalloberfläche) besonders wichtig. Bei der erfindungsgemäßen Apparatur ist dieser enge Kontakt durch äußerst dünne Flüssigkeitsschichten gegeben.

Ist eine längere Verweilzeit der Reaktionsmischung auf,dem Reaktionsblech erwünscht, kann dieses in einem Winkel von ≥ 0 °, vorzugsweise von 45 ° bis 90 °, insbesondere 60 ° bis 90 °, meist bevorzugt bei etwa 90 ° zur Horizontalen aufgestellt werden. Bei 0° erfolgt der Fluidtransport über Kapillarkräfte.

Insgesamt wird mit der Erfindung ein modular aufgebautes, miniaturisiertes Reaktionssystem zur Verfügung gestellt, das aufgrund seiner Mikrostruktur zur Durchführung von Gleichgewichtsreaktionen geeignet ist, bei denen eine flüssige Phase zu mindestens einem gasförmigen bzw. flüchtigen Reaktionsprodukt umgesetzt wird, welches kontinuierlich aus dem Reaktionsstrom entfernt wird und das durch Implementierung einer variablen Anzahl von Zwischenplatten (6) und Fluidführungsplatten (1) eine freie Skalierbarkeit der Menge erlaubt. Zusätzlich/Alternativ kann dieses System zur Rufkonzentrierung von Lösungen verwendet werden, ohne dass eine chemische Reaktion stattfindet.. Es kann mit hochkonzentrierten Lösungen oder sogar in Substanz gearbeitet und dadurch Lösungsmittel eingespart werden. Auf die Fluidführungsplatte (1) kann ein Katalysator fest oder lösbar aufgebracht werden.

Das erfindungsgemäße Mikroreaktorsystem weist eine Reihe von Vorteilen auf, die für die Durchführung solcher Reaktionen von großer Bedeutung sind und bei herkömmlichen Reaktoren und Fallfilmverdampfern nicht angetroffen werden:
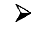 Die in dem erfindungsgemäßen Mikroreaktor realisierbaren geringen Schichtdicken verbessern den Stoffaustausch zwischen der gasförmigen und der flüssigen Phase und damit die Herabsetzung der Reaktionszeit von chemischen Reaktionen. Das schnellere Entfernen flüchtiger Komponenten bewirkt eine zusätzliche Beschleunigung physikalischer Prozesse
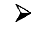 Durch sehr dünne Kapillarfäden wird eine effektivere Temperierung und damit eine verbesserte Kontrolle der Temperatur gewährleistet. Bei
   a. exothermen Reaktionen kann die bei der Reaktion entstehende Wärme sehr schnell abgeführt werden.
   b. endothermen Reaktionen wird die nötige Wärme sehr schnell eingebracht und die Reaktion damit beschleunigt.

Bei gleich bleibendem Umsatz wird die Selektivität erhöht, dadurch treten weniger Nebenreaktionen auf. Das Endprodukt fällt in reinerer und sauberer Form an
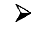 Durch den effektiveren Wärmetransport kann bei
   a. Prozessen und Reaktionen, die eine Beheizung erfordern, mit niedrigeren Temperaturen gearbeitet und dadurch Energie eingespart werden;
   b. bei Prozessen und Reaktionen, die eine Kühlung erfordern, mit höheren Temperaturen gearbeitet und dadurch Energie eingespart werden. Sehr stark exotherme Reaktionen können erstmalig überhaupt kontrolliert durchgeführt werden;
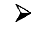 In die Platten eingefügte, speziell geformte Mikrostrukturierungen bilden eine Multiplizität von Kapillarfäden. Dadurch wird die Bildung von Tropfen und Rinnsalen vermieden
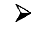 Die Reaktionsflüssigkeit weist eine enge Verweilzeitverteilung auf. Dadurch können die Reaktionsbedingungen weitaus exakter kontrolliert und damit schneller optimiert werden
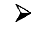 Das geringe Volumen des Funktionsraumes erhöht die Sicherheit der kontinuierlichen Anlage bei der Durchführung von Reaktionen, bei denen hochreaktive Reagenzien eingesetzt werden und/oder Reaktionsprodukte entstehen

Weiterhin Gegenstand der Erfindung ist ein Verfahren, insbesondere ein kontinuierliches Verfahren, zur Durchführung chemischer Reaktionen zwischen zwei oder mehreren Reaktionspartnern in flüssiger, gelöster und/oder suspendierter Phase in Räumen, die von zwei oder mehreren Platten oder Schichten eines erfindungsgemäßen Mikroreaktors gebildet werden, wobei ein oder mehrere gasförmige oder flüchtige Reaktionsprodukte entstehen, dadurch gekennzeichnet, dass die Reaktionsmischung in flüssiger, gelöster und/oder suspendierter Phase in mindestens einem im wesentlichen ununterbrochenen Kapillarfaden entlang der Oberfläche mindestens einer Platte oder Schicht fliesst und die gasförmigen oder flüchtigen Reaktionsprodukte kontinuierlich aus der Reaktionsmischung entfernt werden.

Weiterhin Gegenstand der Erfindung ist ein Verfahren, insbesondere ein kontinuierliches Verfahren, zur Aufkonzentrierung von Lösungen mit einem oder mehreren flüchtigen Lösemitteln in Räumen, die von zwei oder mehreren Platten oder Schichten eines erfindungsgemäßen Mikroreaktors gebildet werden, dadurch gekennzeichnet, dass die flüssige Phase in mindestens einem im wesentlichen ununterbrochenen Kapillarfaden entlang der Oberfläche mindestens einer Platte oder Schicht fliesst und die gasförmigen oder flüchtigen Bestandteile kontinuierlich aus der Reaktionsmischung entfernt werden.

Chemische Reaktionen und/oder physikalische Prozesse werden bei Temperaturen zwischen -80°C und 400°C, vorzugsweise bei einer Temperatur zwischen -40°C und 300°C, besonders bevorzugt bei einer Temperatur zwischen -20°C und 200°C und bei Drücken zwischen 5bar und 10⁻³bar, vorzugsweise bei einem Druck zwischen 2bar und 10⁻²bar, besonders bevorzugt bei einem Druck zwischen 1bar und 10⁻¹bar durchgeführt.

In der Regel werden der Reaktant oder die Reaktanten in Gegenwart von mindestens einem Verdünnungsmittel in einem erfindungsgemäßen Mikroreaktor zur Reaktion gebracht. Bevorzugt werden hochsiedende Verdünnungsmittel eingesetzt. Es kann allerdings auch in Substanz gearbeitet werden.

Als Trägergase werden bevorzugt reaktionsträge Gase verwendet. Besonders bevorzugt sind Stickstoff und Kohlendioxid sowie Edelgase, insbesondere Ar, Ne, He und/oder Kr.

### Beispiele für erfindungsgemäße Reaktionen

Der erfindungsgemäße Mikroreaktor eignet sich besonders zur verbesserten Durchführung von Prozessen und Reaktionen,
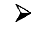 die unter extremen Bedingungen (z.B. bei sehr hoher/tiefer Temperatur und/oder sehr hoher/niedriger Druck) durchgeführt werden,
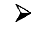 die sich bei herkömmlichen Verfahren durch lange Reaktionszeiten auszeichnen,
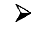 bei denen thermolabile Verbindungen entstehen,
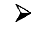 bei denen zumindest eines der Produkte einen niedrigeren Siedepunkt als die Edukte aufweist und,
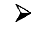 deren Umsatz über das Reaktionsgleichgewicht beeinflusst wird.

Diese Prozesse bzw. Reaktionen können in einem erfindungsgemäßen Mikroreaktor unter schonenderen Bedingungen, schneller und/oder vollständiger durchgeführt werden.

### Beispiele von physikalischen Prozessen:

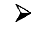 Aufkonzentrierung von Reaktionsmischungen unter Entfernung von Lösemittel
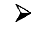 Trocknungsprozesse
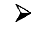 Aufreinigung und Isolierung von thermolabilen Verbindungen
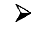 Entgasen von Flüssigkeiten
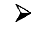 Azeotrope Destillationen
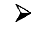 Befreiung von Polymeren in Lösung von nicht umgesetztem Monomeren

Beispiele von chemischen Reaktionen:
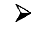 Kondensationsreaktionen unter Abspaltung von
   ■ H₂O (z.B. Aldolreaktionen, Acetalisierung, Polyesterherstellung, Veresterungen)
   ■ R-OH (Esterkondensationen)
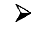 Umesterungen unter Freisetzung von Alkoholen (z.B. MeOH aus Methylestern oder EtOH aus Ethylestern, Umesterung von Fettsäuremethylestern und Fettsäureethylestern unter Freisetzung von Methanol bzw. Ethanol)
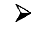 Umlagerungen von Aziden ("Lossen-Schmidt-Reaktion")
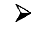 Zersetzung von Aziden
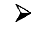 Diazokupplungen ("Sandmeyer-Reaktion")
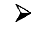 Umsetzungen von Alkyl-Metallverbindungen (z.B. Methyllithium, Butyllithium) unter Entstehung von Alkanen
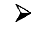 Neutralisationsreaktionen unter Freisetzung von Kohlendioxid (z.B. mit NaHCO₃ oder Na₂CO₃)
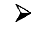 Reaktionen mit Metallhydriden unter Entstehung von Wasserstoff

## Patentansprüche

1. Mikroreaktor zur Durchführung von kontinuierlichen Prozessen, **dadurch gekennzeichnet, dass** eine flüssige Phase in mindestens einem im wesentlichen ununterbrochenen Kapillarfaden entlang der Oberfläche mindestens einer Platte oder Schicht fliesst und die in der flüssige Phase enthaltenen gasförmigen und/oder flüchtigen Bestandteile kontinuierlich aus der flüssigen Phase austreten.

2. Mikroreaktor nach Anspruch 1, **dadurch gekennzeichnet, dass** es sich bei dem Prozess um eine Gleichgewichtsreaktion handelt.

3. Mikroreaktor nach Anspruch 1 oder Anspruch 2, **dadurch gekennzeichnet, dass** es sich bei dem Prozess um eine chemische Reaktion handelt, bei der gasförmige sowie flüchtige Reaktionsprodukte kontinuierlich aus einem flüssigen Reaktionsgemisch entfernt werden.

4. Mikroreaktor nach einem der vorhergehenden Ansprüche, **dadurch gekennzeichnet, dass** das kontinuierliche Entfernen der flüchtigen Bestandteile der flüssigen Phase mittels eines Trägergases und/oder durch Abdestillieren erfolgt.

5. Mikroreaktor nach einem der vorhergehenden Ansprüche, **dadurch gekennzeichnet, dass** er
(a) eine oder mehrere getrennte und/oder gemeinsame Zuleitungen für die fluide Phase,
(b) einen Funktionsraum, dessen Temperatur und Druck reguliert werden kann,
(c) eine oder mehrere getrennte und/oder gemeinsame Ableitungen für das/die gasförmige(n) Bestandteil(e) der flüssigen Phase und
(d) eine oder mehrere Zu- und Ableitungen für das Wärmetauschermedium aufweist.

6. Mikroreaktor nach einem der vorhergehenden Ansprüche, **dadurch gekennzeichnet, dass** er Sensoren zur Kontrolle der Prozessbedingungen, bevorzugt an den Zu- und Ableitungen aufweist.

7. Mikroreaktor nach einem der vorhergehenden Ansprüche, **dadurch gekennzeichnet, dass** der Funktionsraum
(a) eine Ein- und/oder eine Auslasszone besitzt,
(b) auf einer bestimmten Temperatur zwischen -80°C und 400°C, vorzugsweise bei einer Temperatur zwischen -40°C und 300°C, ganz besonders bevorzugt bei einer Temperatur zwischen -20°C und 200°C gehalten wird,
(c) auf einem bestimmten Druck zwischen 5bar und 0,001bar, vorzugsweise zwischen 2bar und 0,005bar, ganz besonders bevorzugt zwischen 1bar und 0,01bar gehalten wird.

8. Mikroreaktor nach einem der vorhergehenden Ansprüche, **dadurch gekennzeichnet, dass** die Prozessführung in einem Funktionsraum stattfindet, in denen die flüssige Phase nur aufgrund des Einflusses der Schwerkraft und/oder von Kapillarkräften in mindestens einem ununterbrochenen Kapillarfaden entlang der Oberfläche einer Schicht oder Platte, bevorzugt einer strukturierten Platte, fliesst.

9. Mikroreaktor nach einem der vorhergehenden Ansprüche, **dadurch gekennzeichnet, dass** die Kapillarfäden eine Dicke zwischen 1µm und 300µm, vorzugsweise eine Dicke zwischen 10µm und 200µm, ganz besonders bevorzugt eine Dicke zwischen 50µm und 100µm aufweisen.

10. Mikroreaktor nach einem der vorhergehenden Ansprüche, **dadurch gekennzeichnet, dass** er mindestens drei strukturierte Platten umfasst,
(a) eine Bodenplatte (22),
(b) eine Fluidführungsplatte (1) und
(c) eine Deckelplatte (12).

11. Mikroreaktor nach einem der vorhergehenden Ansprüche, **dadurch gekennzeichnet, dass** die Fluidführungsplatte (1) eine Wandstärke von 120µm bis 4000µm aufweist und die Kapillarrillen, in welchen Flüssigkeitsfäden erzeugt werden, Breiten von 20µm bis 2000µm und eine Tiefe von 20µm bis 500µm aufweisen, wobei die Stege zwischen zwei benachbarten Kapillarrillen eine Breite von 5µm bis 250µm aufweisen.

12. Mikroreaktor nach einem der vorhergehenden Ansprüche, **dadurch gekennzeichnet, dass** die Fluidführungsplatte (1) mit einer Gesamtwandstärke von 120µm bis 4000µm aus zwei planparallelen, aufeinander befestigten Elementen besteht, wobei
(a) das erste Element (41) eine Wandstärke von 20µm bis 500µm und eine rostförmige Struktur mit mehreren parallel angeordneten Stegen, die sich zwischen zwei orthogonal dazu angeordneten Stegen mit gleicher Wandstärke erstrecken, aufweist, bei der die Durchbrechungen zwischen den parallel angeordneten Stegen eine Breite von 20 µm bis 2000 µm und die parallel angeordneten Stege eine Breite von 5 µm bis 250 µm aufweisen,
(b) das zweite Element (42) die rostförmige Struktur abdeckt, die vorzugsweise eine unstrukturierte, ebene Platte von gleicher Länge und Breite wie das erste Element ist und eine Stärke von 20µm bis 3980µm aufweist.

13. Mikroreaktor nach einem der vorhergehenden Ansprüche, **dadurch gekennzeichnet, dass** die Fluidführungsplatte (1) auf ihrer Rückseite gekühlt bzw. beheizt wird, wobei ein flüssiges oder gasförmiges Wärmetauschermedium in Kanälen von vorzugsweise 0,01mm bis 10mm Weite, bevorzugt in Kanälen von 0,3mm bis 1mm Weite strömt.

14. Mikroreaktor nach einem der vorhergehenden Ansprüche, **dadurch gekennzeichnet, dass** die Zuleitung für die flüssige Phase Vorrichtungen aufweist, welche eine gleichmäßige Verteilung der flüssige Phase auf die einzelnen Kapillarrillen der Fluidführungsplatte (1) gewährleisten.

15. Modular aufgebauter Mikroreaktor nach einem der vorhergehenden Ansprüche, **dadurch gekennzeichnet, dass** durch Einfügen einer beliebigen Anzahl von Zwischenplatten (6) und der gleichen Anzahl Fluidführungsplatten (1) zwischen der Bodenplatte (22) und der Deckelplatte (12) die Anzahl der Funktionsräume im Reaktor entsprechend der Anzahl der eingefügten Zwischenplatten (6) bzw. Fluidführungsplatten (1) erhöht wird.

16. Mikroreaktor nach einem der vorhergehenden Ansprüche, **dadurch gekennzeichnet, dass** eine oder mehrere Fluidführungsplatten (1), die Bodenplatte (22), eine oder mehrere Zwischenplatten (6) und die Deckelplatte (12) aus Edelstahl, Keramik, katalytisch aktiven Materialien, Kunststoffen, Graphit oder Tantal oder Kombinationen dieser Werkstoffe bestehen.

17. Mikroreaktor nach einem der vorhergehenden Ansprüche, **dadurch gekennzeichnet, dass** eine oder mehrere Fluidführungsplatten hergestellt werden, indem man ein rostförmiges Element (41) auf eine unstrukturierte Platte (42) aufbringt.

18. Mikroreaktor nach einem der vorhergehenden Ansprüche, **dadurch gekennzeichnet, dass** der von der Fluidführungsplatte (1) und der Deckelplatte (12) gebildete Raum evakuiert werden kann.

19. Prozess zur Herstellung eines Mikroreaktors nach einem der vorhergehenden Ansprüche, **dadurch gekennzeichnet**, dieser Herstellungsprozess folgende Schritte umfasst:
(a) Herstellen von Platten oder Schichten, deren Oberflächen Mikro- und/oder Feinwerk-technisch so bearbeitet werden, dass sie zusammen mit der Oberfläche einer weiteren Platte oder Schicht Funktionsräume ausbilden
(b) Herstellung einer oder mehrerer Fluidführungsplatten (1)
(c) Stapeln der einzelnen Platten oder Schichten in geeigneter Reihenfolge und Orientierung und
(d) dichtendes Anpressen oder festes oder wieder lösbares Verbinden der einzelnen Platten oder Schichten

20. Verfahren zur Durchführung von kontinuierlichen Prozessen und/oder chemischen Reaktionen in einem Mikroreaktor nach einem der vorhergehenden Ansprüche, **dadurch gekennzeichnet, dass** eine flüssige Phase in mindestens einem im wesentlichen ununterbrochenen Kapillarfaden entlang der Oberfläche mindestens einer Platte oder Schicht fliesst und die in der flüssige Phase enthaltenen gasförmigen und/oder flüchtigen Bestandteile kontinuierlich aus der flüssigen Phase entfernt werden.
